# EUROPÄISCHE PATENTANMELDUNG

(11) **EP 1 402 780 A2**
(43) Veröffentlichungstag der Anmeldung: **31.03.2004**
(21) Anmeldenummer: 03021904.2
(22) Anmeldetag: 29.09.2003
(51) Int. Cl.: A21B 1/44, A21B 1/26

(54) **Backofen**

(30) Priorität: 28.09.2002 DE 10245464
(71) Anmelder: Werner & Pfleiderer Lebensmitteltechnik GmbH, 91550 Dinkelsbühl (DE)
(72) Erfinder: Blümel, Frank, 91614 Mönchsroth (DE); Dannenhauer, Bernd, 91550 Dinkelsbühl (DE); Knost, Dieter, 91550 Dinkelsbühl (DE)
(74) Vertreter: Rau, Manfred, Dr. Dipl.-Ing.

(57) **Zusammenfassung**

Ein Backofen (1) weist einen Zugabeabschnitt (4, 6) mit einer Zugabeöffnung (4) zur Zugabe von Backgut (3), einen Backraum (7) und einen Ausgabeabschnitt (42, 43) mit einer Ausgabeöffnung (43) zur Ausgabe von Backgut (3) auf. Zudem ist eine Umluft-Einrichtung mit einer einen Umluftstrom (37, 39) erzeugenden Umluftquelle, einer Umluft-Heizeinrichtung (33) und einem Umluft-Führungskanal (34, 38, 24, 31, 9, 7), der abschnittsweise durch den Backraum (7) gebildet ist, vorgesehen. Eine äußere Begrenzungswand (8) des Backraums (7) ist um eine vertikal verlaufende Rotationsachse (10) rotationssymmetrisch und sich nach oben hin stetig erweiternd, insbesondere trichterförmig, ausgebildet. Es resultiert ein Backofen ( 1 ), bei dem das Backgut (3) während des Backens bewegt und möglichst gleichmäßig verteilt werden kann.

## Beschreibung

Die Erfindung betrifft einen Backofen mit den Merkmalen gemäß dem Oberbegriff des Anspruches 1.

Ein derartiger Backofen ist durch offenkundige Vorbenutzung bekannt. Derartige Backöfen haben hinsichtlich der Backdauer des Backgutes sowie hinsichtlich ihrer Handhabbarkeit noch Verbesserungspotential.

Es ist daher die Aufgabe der vorliegenden Erfindung, einen Backofen der eingangs genannten Art derart weiterzubilden, dass mit diesem eine kürzere Backzeit bei gleichzeitig möglichst verbesserter Handhabbarkeit des Backofens realisiert werden kann.

Diese Aufgabe ist erfindungsgemäß gelöst durch einen Backofen mit den Merkmalen gemäß Anspruch 1.

Erfindungsgemäß wurde erkannt, dass sich ein effizienteres Backen des Backgutes dann ergibt, wenn dieses einerseits im Umluftstrom bewegt ist und sich andererseits im Backraum möglichst gleichmäßig verteilt. Sowohl die Bewegung des Backgutes im Backraum als auch eine möglichst gleichmäßige Verteilung des Backgutes lassen sich durch die erfindungsgemäß geformte und angetriebene äußere Begrenzungswand des Backraums realisieren.

Ein Backraum mit einer zusätzlichen inneren Begrenzungswand nach Anspruch 2 bietet günstigere Strömungsbedingungen für die diesen durchströmende Umluft.

Eine innere Begrenzungswand nach Anspruch 3 führt zu einer nochmaligen Verbesserung des Strömungsverhaltens für die Umluft.

Bei einer inneren Begrenzungswand mit Umluft-Durchtrittsöffnungen nach Anspruch 4 kann eine gleichmäßige Strömung der Umluft im Backraum erzielt werden. Zudem ist es möglich, die Position der Umluft-Durchtrittsöffnungen an die Form des Backraums derart anzupassen, dass nahezu der gesamte Backraum mit Umluft gleicher Temperatur durchströmt wird, was die Gleichmäßigkeit des Backergebnisses verbessert.

Ein Backraum-Verschluss nach Anspruch 5 ermöglicht eine automatische Ausgabe des fertig gebackenen Backgutes aus dem Backraum.

Ein Backraumverschluss nach Anspruch 6 vereinfacht die konstruktive Auslegung des Backofens.

Eine schiefe Ebene nach Anspruch 7 ermöglicht auf besonders einfache Weise eine automatische Ausgabe des fertig gebackenen Backgutes.

Wenn der Backraum-Verschluss und eine die Ausgabeöffnung verschließende Ausgabetür nach Anspruch 8 ausgeführt sind, lässt sich ein gesteuerter Backzyklus mit nachfolgender vollautomatischer Ausgabe des fertig gebackenen Backgutes realisieren. Ein derartiger Backzyklus kann z.B. durch das Zugeben des Backgutes in den Zugabeabschnitt des Backofens automatisch eingeleitet werden.

Eine Ausführungsform des Backofens nach Anspruch 9 erleichtert zu Beginn eines Backvorganges das Aufheizen des Backraums.

Alternativ oder zusätzlich zu der bevorzugten Ausführungsform nach Anspruch 9 kann eine Beschwadungseinrichtung nach Anspruch 10 vorgesehen sein. Die Beschwadungseinrichtung führt zu einer kontrollierten Befeuchtung des Backgutes, was zu einer Verbesserung des Backergebnisses führt. In Verbindung mit der Vakuumpumpe lässt sich mit der Beschwadungseinrichtung ein gleichmäßigeres Befeuchten des Backgutes realisieren, was das Backergebnis nochmals verbessert.

Ein Ausführungsbeispiel der Erfindung wird nachfolgend anhand der Zeichnung näher erläutert. In dieser zeigen:
- Fig. 1: eine perspektivische Außenansicht eines Backofens;
- Fig. 2: eine perspektivische, aufgebrochene Innenansicht des Backofens von Fig. 1 mit einem Backraum-Verschluss in Backposition; und
- Fig. 3: eine zu Fig. 2 ähnliche Darstellung mit dem Backraum-Verschluss in Ausgabeposition.

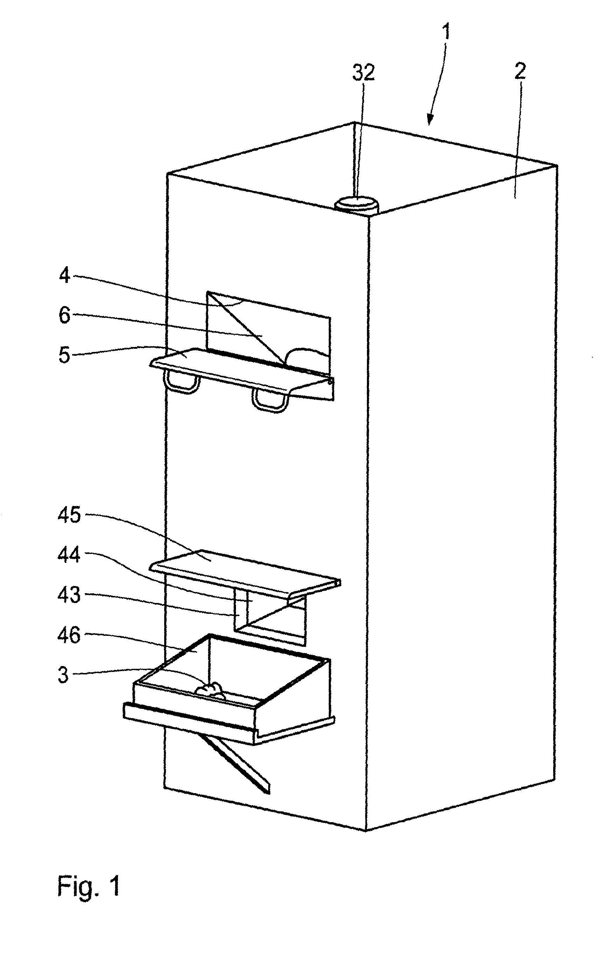

Der in Fig. 1 insgesamt mit dem Bezugszeichen 1 bezeichnete Backofen weist ein Ofengehäuse 2 auf, welches eine quadratische Grundfläche von einem Quadratmeter einnimmt und eine Höhe von ca. 2 m hat. Backgut 3, z.B. tief- oder teilgefrorene Brötchen, gelangt über eine Zugabeöffnung 4, die von einer vorzugsweise manuell bedienbaren, dicht schließende Zugabetür 5 verschlossen werden kann, ins Innere des Backofens 1. Der Zugabeöffnung 4 nachgeordnet ist ein Zugabeschacht 6, der zu einem ringförmigen Backraum 7 führt, dessen Ringdurchmesser sich nach oben hin vergrößert. Der Backraum 7 ist rotationssymmetrisch und nach außen begrenzt durch eine sich nach oben erweiternde trichterförmige äußere Begrenzungswand 8. Nach Innen ist der Backraum 7 begrenzt durch eine sich nach oben hin im Querschnitt erweiternde kegelförmige innere Begrenzungswand 9. Der Backraum 7 und die Begrenzungswände 8,9 haben eine gemeinsame, vertikal verlaufende Symmetrieachse 10.

Die innere Begrenzungswand 9 wird getragen von einer zentral sich längs der Symmetrieachse 10 erstreckenden Haltestange 11, die wiederum von einer oberhalb des Zugabeschachts 6 im Ofengehäuse 2 angeordneten Halteplatte 12 getragen ist.

Die äußere Begrenzungswand 8 ist um die Symmetrieachse 10 drehbar. Hierzu ist sie im Bereich des Bodens des Backraums 7 über drei in Umfangsrichtung um die Symmetrieachse 10 gleich verteilt angeordnete Kugellager, die ein erstes Radiallager 13 für die äußere Begrenzungswand 8 bilden, gelagert. Wie auch die nachfolgend noch beschriebenen Lager ist das erste Radiallager 13 in der Zeichnung nur schematisch dargestellt. Gehäuseseitig ist das erste Radiallager 13 an einem ersten Zwischenboden 14 im Ofengehäuse 2 angebracht.

Im oberen Bereich des Backraums 7 oberhalb einer horizontal verlaufenden Abschlusswand 15 der inneren Begrenzungswand 9, ist die äußere Begrenzungswand 8 über drei in Umfangsrichtung gleich verteilt angebrachte Querstreben 16 mit einer Lager-Innenhülse 17 verbunden, welche die Haltestange 11 drehbar umgibt. Die Lager-Innenhülse 17 ist um die Symmetrieachse 10 drehbar über ein zweites Radiallager 18, welches als umlaufendes Kugellager ausgebildet ist, und über ein Axial-/Radial-Lager 19, welches zwei umlaufend angeordnete Kugellager aufweist, in einer Lager-Außenhülse 20 gelagert. Letztere ist fest mit einem oberhalb der Querstreben 16 angeordneten zweiten Zwischenboden 21 des Backofens 1 verbunden. Die Lager-Innenhülse 17 trägt eine horizontal liegende und die Haltestange 11 umgebende Antriebsscheibe 22, die über einen Keilriemen 23 von einem nicht dargestellten Antriebsmotor angetrieben werden kann. Mit dem Antriebsmotor lässt sich somit eine Rotation der äußeren Begrenzungswand 8 des Backraums 7 um die Symmetrieachse 10 antreiben.

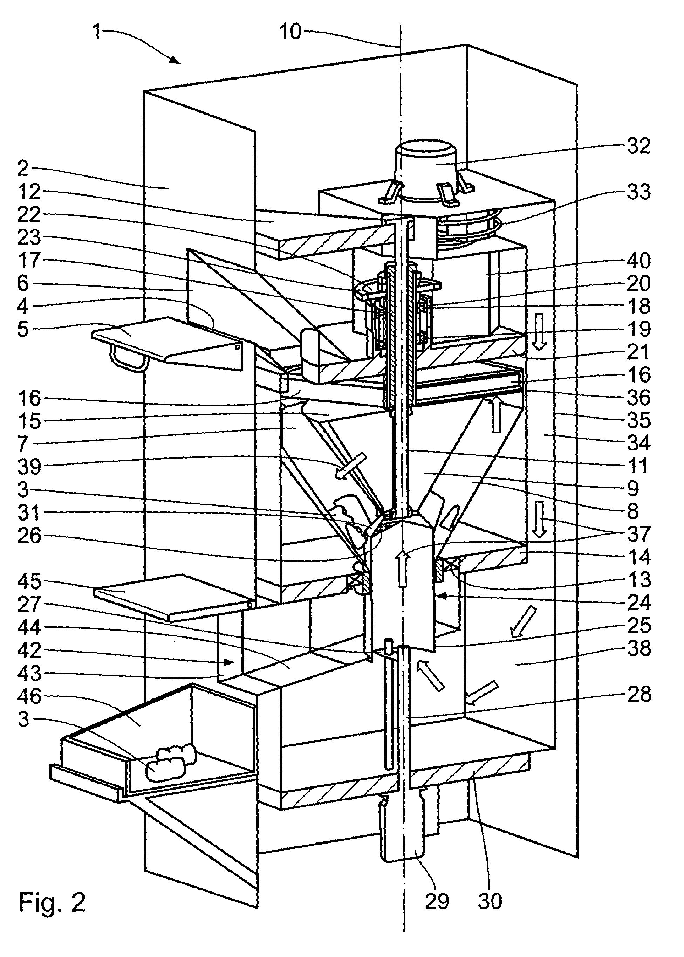

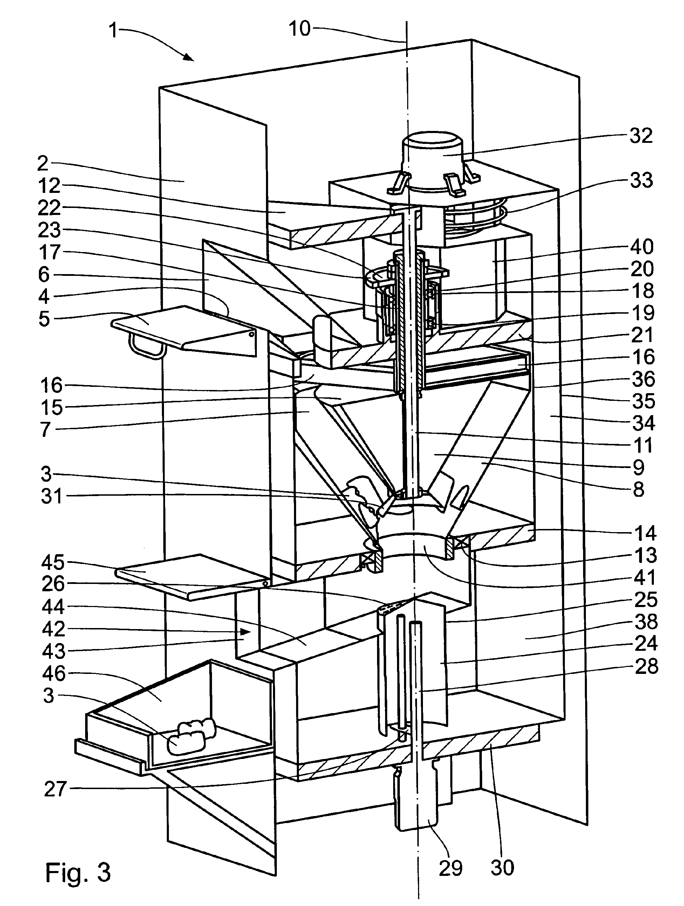

Nach unten hin wird der Backraum 7 begrenzt durch einen Backraum-Verschluss 24 mit einer zylindrischen Mantelwand 25, welche nach oben hin von einem nach oben gewölbten Gitter 26 abgedeckt ist. Der Backraum-Verschluss 24 ist zwischen einer in Fig. 2 dargestellten Backposition und einer in Fig. 3 dargestellten Ausgabeposition verschiebbar. Hierzu ist die Mantelwand 25 über ein Verbindungselement 27 und eine Schieberstange 28 mit einem Hubzylinder 29 verbunden, der von einem unterhalb des Backraum-Verschlusses 24 angeordneten, wärmeisolierten dritten Zwischenboden 30 des Backofens 1 getragen ist. In der Backposition liegt der äußere Umfangsbereich des Gitters 26 des Backraum-Verschlusses 24 an einem trichterförmigen Leitblech 31 an, welches am unteren Ende der inneren Begrenzungswand 9 montiert ist.

Der Backraum 7 wird mit beheizter Umluft geheizt. Diese wird erzeugt von einem Ventilator 32 mit einem elektrischen Heizelement 33, der vom zweiten Zwischenboden 21 getragen ist. Vom Heizelement 33 beheizte Umluft wird zunächst durch einen ersten Umluft-Führungskanalabschnitt 34 geführt, der zwischen einer seitlichen Innengehäusewand 35 und einer die äußere Begrenzungswand 8 umgebenden Backraumgehäusewand 36 ausgebildet ist. Wie in Fig. 2 durch Strömungsrichtungspfeile 37 angedeutet, gelangt die Umluft vom ersten Umluft-Führungskanalabschnitt 34 zunächst in einen Umluft-Sammelraum 38, der zwischen dem ersten Zwischenboden 14 und dem dritten Zwischenboden 30 angeordnet ist. Vom Umluft-Sammelraum 38 strömt die Umluft in den nach unten offenen Backraum-Verschluss 24 und von dort durch das Gitter 26 und geführt durch das Leitblech 31 durch im Leitblech 31 ausgebildete Verbindungsöffnungen in die innere Begrenzungswand 9. Über Durchtrittsöffnungen in der inneren Begrenzungswand 9 gelangt die Umluft anschließend in den Backraum 7, wie durch den Strömungsrichtungspfeil 39 in Fig. 2 verdeutlicht. Die Verbindungsöffnungen im Leitblech 31 und die Durchtrittsöffnungen in der inneren Begrenzungswand 9 sind in der Zeichnung nicht dargestellt. Über einen zweiten Umluft-Führungskanalabschnitt 40 verlässt die Umluft den Backraum 7 wieder in Richtung des Ventilators 32.

Fig. 3 zeigt den Backraum-Verschluss 24 in einer Ausgabeposition, in der er verglichen mit der Backposition mit Hilfe des Hubzylinders 29 nach unten verlagert ist. Hierdurch wird eine Bodenöffnung 41 des Backraums 7, die im ersten Zwischenboden 14 ausgebildet ist, freigegeben. Die runde Bodenöffnung 41 verbindet den Backraum 7 mit einem Ausgabeschacht 42, der eine zu einer Ausgabeöffnung 43 hin geneigte schiefe Ebene 44 aufweist. Die Ausgabeöffnung 43 ist mittels einer motorisch schwenkbaren Ausgabetür 45 verschließbar. Unterhalb der Ausgabeöffnung 43 ist ein Backgut-Sammelbehälter 46 angeordnet.

Der Backofen 1 wird folgendermaßen bedient:

Zur Beschickung des Backofens 1 mit einer z.B. fünfundvierzig Brötchen umfassenden Backgut-Charge wird die Zugabetür 5 geöffnet. Zu diesem Zeitpunkt ist der Backraum-Verschluss 24 in der Backposition. Anschließend wird das Backgut 3 in den Backofen 1 eingefüllt, wobei es durch den Zugabeschacht 6 in den Backraum 7 rutscht und sich am vom Backraum-Verschluss 24 verschlossenen Boden des Backraums 7 sammelt. Anschließend wird die äußere Begrenzungswand 8 mittels des Antriebsmotors in Rotation versetzt und es werden der Ventilator 32 sowie das Heizelement 33 aktiviert. Durch die aufgrund der Rotation der äußeren Begrenzungswand 8 auftretende Fliehkraft wird das Backgut 3 gleichmäßig auf der äußeren Begrenzungswand 8 und damit gleichmäßig im Backraum 7 verteilt. Gleichzeitig wird das Backgut 3 durch die den Backraum 7 durchtretende beheizte Umluft beheizt und damit gebacken. Nach Abschluss des Backvorganges wird die Rotation der äußeren Begrenzungswand 8 beendet oder deutlich verringert, so dass sich das Backgut 3 unter Schwerkrafteinfluss am Boden des Backraums 7 sammelt. Zeitgesteuert wird dann mit Hilfe des Hubzylinders 29 der Backraum-Verschluss 24 in die Ausgabeposition nach Fig. 3 verlagert. Gleichzeitig wird gesteuert die Ausgabetür 45 geöffnet. Das fertig gebackene Backgut 3 verlässt unter Einfluss der Schwerkraft den Backraum 7 durch die Bodenöffnung 41, rutscht über die schiefe Ebene 44 hin zur Ausgabeöffnung 43 und fällt durch diese in den Backgut-Sammelbehälter 46. Die Backzeit beträgt ca. 12 Minuten.

Eine nicht dargestellte Ausführungsform des Backofens 1 weist zusätzlich eine Vakuumpumpe auf, mit der im Backraum 7 ein vorgegebener Unterdruck einstellbar ist. Gleichzeitig weist diese Ausführungsform des Backofens 1 eine an sich bekannte Beschwadungseinrichtung auf, mit der der Backraum 7 mit Wasserdampf-Schwaden versorgt werden kann.

Zu Beginn des Backvorganges wird bei dieser Ausführungsform der Backraum 7 mit der Vakuumpumpe zunächst abgepumpt, so dass das dort befindliche Backgut 3 anschließend durch die Umluft schneller beheizt werden kann. Durch das Zusammenspiel der Vakuumpumpe und der Beschwadungseinrichtung wird zudem eine effizientere Befeuchtung des Backgutes durch die Schwaden erzielt.

Bei einer weiteren, ebenfalls nicht dargestellten Ausführungsform des Backofens wird der Öffnungs- und Schließvorgang der Zugabetür 5 automatisch gesteuert.

## Patentansprüche

1. Backofen (1)
- mit einem Zugabeabschnitt (4, 6) mit einer Zugabeöffnung (4) zur Zugabe von Backgut (3),
- mit einem Backraum (7),
- mit einem Ausgabeabschnitt (42, 43) mit einer Ausgabeöffnung (43) zur Ausgabe von Backgut (3),
- mit einer Umluft-Einrichtung, welche umfasst:
-- eine einen Umluftstrom (37, 39) erzeugende Umluftquelle (32),
-- eine Umluft-Heizeinrichtung (33),
-- einen Umluft-Führungskanal (34, 38, 24, 31, 9, 7), der zumindest abschnittsweise durch den Backraum (7) gebildet ist,
**gekennzeichnet durch**
- eine äußere Begrenzungswand (8) des Backraums (7), die um eine vertikal verlaufende Rotationsachse (10) rotationssymmetrisch und sich nach oben hin stetig erweiternd, insbesondere trichterförmig, ausgebildet ist, und
- eine Antriebseinrichtung (22, 23), mittels der die äußere Begrenzungswand (8) um die Rotationsachse (10) drehbar angetrieben ist.

2. Backofen nach Anspruch 1, **dadurch gekennzeichnet, dass** der Backraum (7) neben der äußeren Begrenzungswand (8) noch eine innere Begrenzungswand (9) aufweist.

3. Backofen nach Anspruch 2, **dadurch gekennzeichnet, dass** die innere Begrenzungswand (9) um eine vertikal verlaufende Rotationsachse (10) rotationssymmetrisch und sich nach oben hin stetig erweiternd, insbesondere kegelförmig und parallel zur äußeren Begrenzungswand (8) ausgebildet ist.

4. Backofen nach Anspruch 2 oder 3, **dadurch gekennzeichnet, dass** die innere Begrenzungswand (9) Umluftdurchtrittsöffnungen aufweist.

5. Backofen nach einem der Ansprüche 1 bis 4, **gekennzeichnet durch** einen bodenseitig des Backraums (7) angeordneten Backraum-Verschluss (24), der mittels eines Aktuators (29) zwischen einer Backposition, in der der Backraum-Verschluss (24) den Backraum (7) bodenseitig verschließt und einer Ausgabeposition, in der er eine Verbindung zwischen dem Backraum (7) und dem Ausgabeabschnitt (42, 43) schafft, verlagerbar ist.

6. Backofen nach Anspruch 5, **dadurch gekennzeichnet, dass** der Backraum-Verschluss (24) ein Teil des Umluft-Führungskanals (34, 38, 24, 31, 9, 7) ist.

7. Backofen nach einem der Ansprüche 1 bis 6, **gekennzeichnet durch** eine schiefe Ebene (44) zwischen dem Backraum (7) und einer Ausgabeöffnung (43), die Teil des Ausgabeabschnitts (42, 43) ist.

8. Backofen nach Anspruch 7, **dadurch gekennzeichnet, dass** der Backraum-Verschluss (24) und eine die Ausgabeöffnung (43) verschließende Ausgabetür (45) derart ausgeführt sind, dass sie gesteuert verlagert werden können.

9. Backofen nach einem der Ansprüche 1 bis 8, **gekennzeichnet durch** eine an den Backraum (7) angeschlossene und gesteuert zuschaltbare Vakuumpumpe, mit der im Backraum (7) ein vorgegebener Unterdruck einstellbar ist.

10. Backofen nach einem der Ansprüche 1 bis 9, **gekennzeichnet durch** eine an den Backraum (7) angeschlossene und gesteuert zuschaltbare Beschwadungseinrichtung, mit der der Backraum (7) mit Schwaden versorgt werden kann.
